Europäisches Patentamt

European Patent Office

Office européen des brevets

(11) Numéro de publication: **0 171 302**
**B1**

(12) **FASCICULE DE BREVET EUROPÉEN**

(45) Date de publication du fascicule du brevet:
**04.10.89**

(51) Int. Cl.⁴: **H 04 B 3/54,** H 02 J 13/00

(21) Numéro de dépôt: **85401245.7**

(22) Date de dépôt: **21.06.85**

(54) **Procédé et équipement pour le transfert de signaux concernant une machine électrique munie d'un câble triphasé d'alimentation.**

(30) Priorité: **03.07.84 FR 8410526**

(43) Date de publication de la demande:
**12.02.86 Bulletin 86/7**

(45) Mention de la délivrance du brevet:
**04.10.89 Bulletin 89/40**

(84) Etats contractants désignés:
**AT BE DE FR GB IT SE**

(56) Documents cité:
**EP-A-0 058 754**
**EP-A-0 115 814**
**EP-A-0 141 749**
**DE-A-439 471**
**FR-A-907 995**
**FR-A-2 191 796**
**GB-A-1 204 087**

**IEEE TRANSACTIONS ON POWER APPARATUS AND SYSTEMS, vol. PAS-91 no. 2, mars/avril 1972, pages 587-591, IEEE, New York, US; D.L. HEDRICK et al.: "765-kV power line carrier communications; III-equipment development and design"**

(73) Titulaire: **Etablissement public dit: CHARBONNAGES DE FRANCE, 9, Avenue Percier, F-75008 Paris (FR)**

(72) Inventeur: **Noel, Marc, 14 rue de Paris, F-60530 Neuilly En Thelle (FR)**

(74) Mandataire: **Rinuy, Santarelli, 14, avenue de la Grande Armée, F-75017 Paris (FR)**

## Description

La présente invention concerne un procédé et un équipement pour le transfert de signaux associés à une machine électrique munie d'un câble triphasé d'alimentation elle concerne plus précisément le transfert d'ordres de télécommande pour cette machine et/ou le transfert en retour de signaux de mesure et de visualisation.

L'invention s'applique notamment à des machines ou des engins de chantier, de mine ou de carrière.

La Demanderesse a déjà proposé, par sa demande de brevet européen EP-A-141 749 du 2 novembre 1984 (date de priorité 4.11.83, publication 15.5.85), un procédé de télécommande à vue directe d'un engin de chantier et un ensemble émetteur-récepteur adapté à sa mise en oeuvre, qui s'appliquent notamment à une haveuse.

Ainsi qu'on le sait, la commande à distance de machines ou engins de chantier a pour principal objet d'écarter le conducteur ou le pilote de l'engin vis-à-vis d'une zone de travail jugée dangereuse, et de le placer dans des conditions optimales de travail. La demande de brevet précitée visait à permettre au conducteur de suivre visuellement les opérations télécommandées tout en restant à l'abri. Un tel suivi visuel permet au conducteur un contrôle aisé du comportement de l'engin télécommandé et autorise la mise en oeuvre d'une liaison par rayonnement électromagnétique entre l'émetteur porté par le pilote, et le récepteur lié à l'engin télécommandé. Une telle liaison par rayonnement évite l'emploi des câbles souples susceptibles d'être écrasés ou détériorés.

Dans certains cas, par exemple pour une haveuse travaillant dans une taille au pendage en dressant, les conditions de travail peuvent toutefois être telles que le conducteur ne puisse plus trouver un emplacement dans lequel il soit suffisamment à l'abri et conserve en même temps une bonne vision de l'engin télécommandé. Seule une télécommande "en aveugle" peut alors être envisagée.

Comme on le comprend aisément, une télécommande "en aveugle" impose l'établissement d'une liaison bilatérale entre le conducteur et son engin le conducteur qui envoie des ordres à son engin doit en effet pouvoir contrôler la bonne exécution de ces ordres et le comportement satisfaisant des divers éléments de l'engin.

Il apparaît que, dès lors que le conducteur n'assure plus de contrôle visuel de son engin, il n'est plus utile que ledit conducteur reste à proximité de cet engin une télécommande par câble semble alors s'imposer.

Dans le cas d'une haveuse par exemple, il peut ainsi être prévu que le conducteur soit dans une cabine (ou poste) de pilotage située vis-à-vis de l'engin considéré à une distance pouvant aller jusqu'à 1000 m. environ. En pratique, ce poste de pilotage est de préférence situé à proximité du câble triphasé qui alimente l'engin en puissance électrique. La distance précitée correspond ainsi, de façon courante, à une longueur de câble souple pouvant aller jusqu'à 200 m. entre l'engin considéré et un coffret, appelé coffret de chantier - qui sert principalement, à la manière d'un interrupteur, à la commande de la mise sous tension, ou hors tension, des divers équipements du chantier en question - et une longueur de câble armé, entre ce coffret de chantier et le poste de pilotage, pouvant aller jusqu'à 800 m.

La présente invention a pour objet d'assurer le transfert des signaux concernant l'engin à télécommander le long de ce câble triphasé d'alimentation, plus précisément le long des conducteurs de phase, sans avoir à faire intervenir le conducteur de terre, pourtant aisément reconnaissable.

Dans le domaine général de la transmission de signaux le long des conducteurs de phase de câbles triphasés, il est déjà connu de par le document FR-A-907 995 de brancher à l'identique deux éléments de transmission entre un conducteur de phase et les deux autres conducteurs de phase pris conjointement, en vue de pouvoir brancher sans interférence deux circuits de transmission sur ces conducteurs. Mais ce document ne se préoccupe pas de transférer des signaux concernant une machine électrique par l'intermédiaire de son propre câble triphasé électrique.

De toute façon, ce document exige une identification de chaque conducteur de phase avant de connecter chacun des éléments de transmission de chacun des circuits de transmission. Pourtant, des raisons pratiques exigent parfois, notamment dans les mines, que la transmission de signaux puisse être assurée sans identification préalable des conducteurs de phase (un éventuel remplacement d'un tronçon de câble détérioré doit en effet pouvoir être effectué sans précautions spécifiques).

L'invention a donc pour objet de permettre l'usage du même câble triphasé à la fois pour alimenter électriquement une machine et pour transférer de manière fiable des signaux la concernant, sans utiliser le conducteur de terre, et sans identification préliminaire des conducteurs de phase.

L'invention a également pour objet un procédé de transfert de signaux adapté à transmettre un débit informationnel aussi élevé qu'il est nécessaire. En effet, si le nombre d'ordres que l'on souhaite pouvoir transmettre par télécommande à une machine de chantier est généralement faible (par exemple six ordres tout-ou-rien et un ordre proportionnel), le nombre requis d'informations en retour peut être bien plus important, de plusieurs dizaines le plus souvent (par exemple 12 mesures et 24 informations en tout-ou-rien).

L'invention a également pour objet un équipement de transfert de signaux adapté à assurer une liaison bilatérale entre le poste de pilotage et l'engin télécommandé, faisant intervenir deux chaînes croisées d'émission-réception comportant un minimum d'éléments communs, de manière à ce qu'un incident de fonctionnement dans l'une de ces chaînes puisse intervenir, de manière générale, sans affecter le fonctionnement de l'autre chaîne.

L'invention propose ainsi un procédé pour le transfert de signaux concernant une machine électrique par modulation en amplitude d'une fréquence porteuse, selon lequel on applique un signal à émettre en un premier point d'un câble triphasé au travers d'un coupleur, et on recueille un signal de réception en un second point de ce câble triphasé au travers d'un autre coupleur, caractérisé en ce que, ce câble triphasé étant le câble triphasé d'alimentation dont est munie la machine électrique, on applique le signal à émettre entre l'un quelconque des conducteurs de phase de ce câble et les deux autres conducteurs de phase pris conjointement, et on recueille le signal de réception entre l'un quelconque des conducteurs de phase du câble et les deux autres pris conjointement, chaque coupleur comportant des condensateurs semblables associés à chacun des conducteurs de phase ainsi qu'une inductance.

L'invention propose dans le même esprit un équipement de transfert pour le transfert de signaux associés à une machine électrique, comportant un émetteur et un récepteur accordés sur une fréquence porteuse et respectivement connectés par des coupleurs en deux points distants d'un câble triphasé, caractérisé en ce que ce câble est le câble triphasé d'alimentation dont est munie la machine électrique, en ce que chaque coupleur comporte des condensateurs semblables associés à chacun des conducteurs de phase ainsi qu'une inductance, et en ce que l'émetteur et le récepteur sont connectés, indépendamment l'un de l'autre, entre l'un quelconque des conducteurs de phase, et les deux autres conducteurs de phase pris conjointement.

On notera que dans sa version la plus générale, l'invention concerne un transfert de signaux le long d'un câble triphasé dans un sens seulement, pour la surveillance par exemple d'une machine pré-programmée ou, à l'inverse, pour la télécommande d'une machine dont la surveillance est assurée par ailleurs. Il est toutefois précisé que la mise en oeuvre de l'invention est tout particulièrement avantageuse dans le cas d'un échange croisé d'informations entre deux zones d'un câble triphasé. La Demanderesse a en effet pu constater que le fait de faire transiter les signaux à l'intérieur des conducteurs de phase leur accorde une bonne immunité, contre les perturbations électro-magnétiques notamment, d'où un rapport signal/bruit élevé, tandis que le montage préconisé par l'invention pour le couplage des émetteurs et des récepteurs au moyen du câble d'alimentation ne conduit, dans le pire des cas, qu'à une perte de signal de 6 dB environ, très inférieure au rapport signal/bruit que l'invention permet d'obtenir: ce rapport reste toujours élevé.

L'invention préconise tout particulièrement que les signaux à transmettre, lorsqu'ils sont nombreux, soient répartis en cycles de plusieurs séquences de bits. En pratique, les séquences comportent généralement 16 bits;

si, selon l'invention, on utilise 3 bits pour assurer la synchronisation des séquences de bits, et un bit pour la synchronisation des cycles de séquences, cela laisse 12 bits pour le transfert d'informations proprement dites. Cela confère à l'invention un aspect modulaire dans la mesure où des cartes électroniques d'entrées-sorties comportent actuellement 12 voies distinctes;

on peut établir une correspondance entre les cartes et les séquences de bits, les informations d'une carte occupant une séquence de bits et l'addition, du point de vue électronique, d'une nouvelle carte n'impliquant, du point de vue informatique, que l'addition d'une nouvelle séquence dans chaque cycle. L'invention préconise que la première séquence de chaque cycle soit caractérisée par la présence d'un "1" dans le bit associé de synchronisation de cycle. L'intérêt de cette précision provient de ce que la Demanderesse a pu observer, après de nombreux essais, que d'éventuels parasites, s'ils provoquent parfois la conversion de ce bit de "1" en "0", ne font apparaitre en pratique aucune valeur "1" indue dans ce bit de synchronisation de cycle: la récupération de façon fiable de la synchronisation de ce cycle s'en trouve facilitée.

D'autres objets, caractéristiques et avantages de l'invention ressortent de la description qui suit, donnée à titre d'exemple non limitatif, en regard des dessins annexés sur lesquels:

- la figure 1 est une vue schématique en perspective partielle d'un montages selon l'invention d'un émetteur et d'un récepteur sur un câble triphasé d'alimentation;
- la figure 2 est un schéma électrique représentant le montage de la figure 1;
- la figure 3 est un schéma synoptique d'un équipement de télécommande "en aveugle" selon l'invention;
- la figure 4 est un schéma synoptique du circuit global de codage binaire associé au poste de pilotage de la figure 3;
- la figure 5 est un schéma synoptique du circuit global de codage binaire associé à la haveuse de la figure 3;
- la figure 6 est un schéma synoptique du codeur binaire de la figure 4;
- la figure 7 est un schéma synoptique du décodeur binaire de la figure 5;
- la figure 8 est un diagramme représentant une séquence binaire codée en biphase selon l'invention, et
- la figure 9 est un diagramme représentant la première séquence binaire codée en biphase d'un cycle selon l'invention.

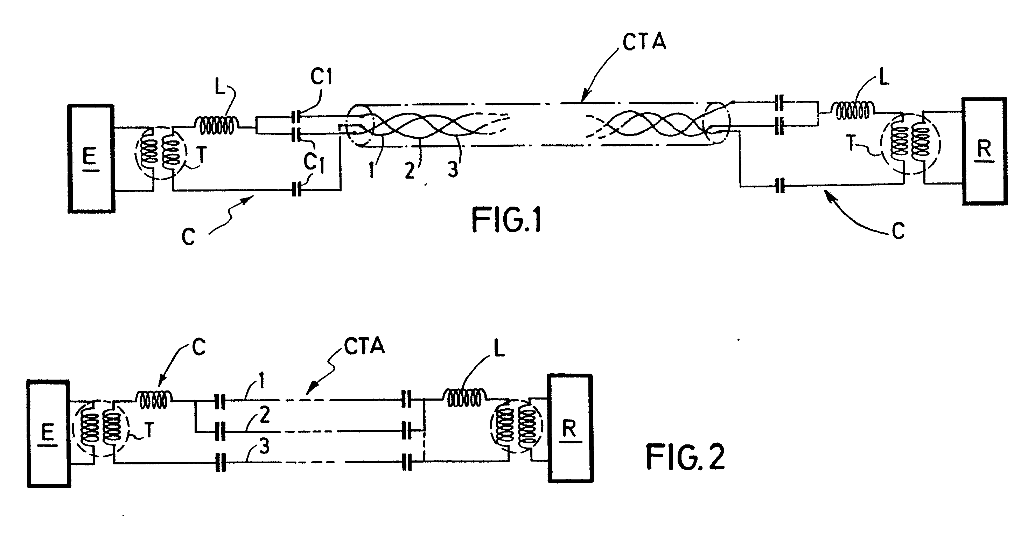

Le circuit schématique représenté à titre d'exemple à la figure 1 comporte principalement un émetteur E, un récepteur R, un câble triphasé CTA et deux coupleurs identiques C intercalés chacun entre l'émetteur ou le récepteur, et l'extrémité en regard du câble triphasé.

Selon l'invention, chaque coupleur assure le branchement de l'émetteur ou du récepteur associé entre l'un quelconque des conducteurs de phase 1, 2 ou 3 du câble triphasé, d'une part, et les deux autres conducteurs de phase pris conjointement.

Dans l'exemple représenté, chaque coupleur comporte trois condensateurs identiques $C_1$ associés respectivement à chacun des conducteurs de phase, et une inductance L. Un transformateur T est en outre prévu de façon avantageuse entre l'émetteur (ou le récepteur) et le câble triphasé pour en assurer une séparation galvanique.

Un tel circuit présente l'avantage que l'on peut facilement donner une approximation par le calcul de la valeur optimale des divers composants en fonction de la fréquence porteuse choisie pour le transfert des signaux, et les impédances apparentes de l'émetteur (ou du récepteur) et du câble triphasé CTA vis-à-vis du coupleur considéré.

En fait, la fréquence est de préférence choisie en fonction des caractéristiques du câble triphasé considéré, en sorte d'optimiser les performances de transfert du câble considéré.

Dans le cas d'une haveuse par exemple, avec un câble triphasé à 1 kV d'une longueur de 1000 m environ, des fréquences de 300 à 400 kHz sont apparues optimales. De façon générale, le fait d'accorder le coupleur en fonction d'une telle fréquence de plusieurs centaines de kilohertz conduit a réduire l'influence de la fréquence basse du courant d'alimentation (50 ou 60 Hz selon les pays).

Un branchement arbitraire de chaque coupleur aux trois conducteurs de phase du câble triphasé en chacune de ses extrémités donne lieu à six cas possibles qui, compte tenu de l'équivalence des deux conducteurs de phase pris conjointement pour le branchement de chaque coupleur, se ramènent à deux cas distincts illustrés à la figure 2.

Le circuit représenté en traits pleins à la figure 2 correspond au cas où les deux conducteurs de phase pris conjointement pour le branchement des coupleurs aux extrémités du câble triphasé CTA sont les mêmes. Il s'agit d'un cas favorable (il y en a 2 sur les 6 cas possibles) où le signal, qui se divise entre les conducteurs 1 et 2 à la sortie de l'émetteur, se reconstitue avant d'être appliqué au récepteur: ce dernier reçoit le signal "entier".

Si, par contre, comme représenté en pointillé à la figure 2 à l'entrée du coupleur de droite associé au récepteur, les conducteurs de phase pris conjointement aux extrémités du câble triphasé sont différents (cela correspond à 4 des 6 cas possibles), le conducteur de phase 2 établit un court-circuit entre les deux coupleurs. Il s'agit là d'un cas défavorable où ne parvient au récepteur qu'une "moitié" environ du signal émis. Il apparait pourtant que cela ne correspond qu'à une perte de signal de 6 dB environ, ce qui, compte tenu des optimisations auxquelles se prêtent les coupleurs C, et de la relative immunité, vis-à-vis des perturbations électromagnétiques, des signaux transitant dans les conducteurs de phase, reste compatible avec l'obtention au récepteur, en fin de compte, d'un rapport signal/bruit supérieur à 40 dB. Les coupleurs C des figures 1 et 2 permettent donc un transfert fiable de signaux; on parle de signaux "certains".

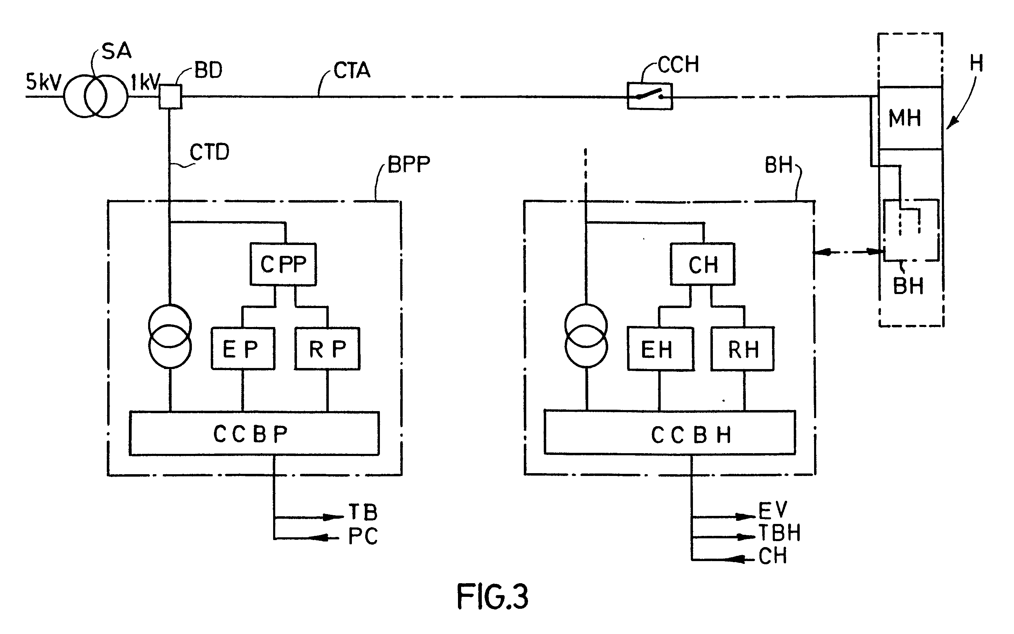

La figure 3 représente à titre d'exemple un schéma synoptique d'un équipement de télécommande associé à une haveuse H dans une taille de mine.

Ainsi qu'on le sait, une haveuse est une machine d'abattage qui se déplace parallèlement à un front de taille, de façon alternative, et qui est munie de tambours rotatifs, portés par des bras orientables, qui "raclent" le minerai à abattre. Les principaux ordres nécessaires à son fonctionnement sont, d'une part, un ordre proportionnel correspondant au sens et à la vitesse de déplacement de la haveuse devant le front de taille et, d'autre part, des ordres tout-ou-rien correspondant à une inclinaison complémentaire vers le haut ou vers le bas de chacun des bras associés aux tambours rotatifs, ainsi qu'au serrage d'un frein de sécurité. Pour contrôler le bon fonctionnement de la haveuse, on a besoin, en pratique, de signaux de mesure donnant en retour, avec une précision de 1 % de préférence, la position des bras précités et diverses inclinaisons et, avec une précision un peu moindre (3 % par exemple), la température du moteur et diverses pressions hydrauliques: il s'agit de télémesures. On a, de même, besoin de suivre le bon fonctionnement ou l'état de divers éléments (télésignalisations en tout-ou-rien), tels que le moteur, des électrovannes essentielles, (notamment celle associée au frein de sécurité), ou encore le thésigraphe (qui est un organe indiquant la position de la haveuse entre ses positions extrêmes et à l'aide duquel on peut détecter une éventuelle survitesse de la haveuse: il convient alors d'actionner le frein de sécurité) il s'agit de signalisations.

L'équipement de la figure 3 se greffe sur le câble triphasé d'alimentation CTA reliant la haveuse H à une source d'alimentation SA (en pratique un transformateur de 500 kVA alimenté sous 5 kV et fournissant sur le câble CTA une tension de 1 kV environ).

Le câble comporte d'abord un tronçon de câble armé jusqu'à un coffret de chantier CCH puis un tronçon souple jusqu'à la haveuse H. Parmi les diverses parties de cette dernière, seuls sont indiqués le moteur MH et le bloc électronique associé BH, qui est relié à des électrovannes et des relais EV, au tableau de bord TBH de la haveuse et à des capteurs CH.

Un poste de pilotage disposé à proximité du câble d'alimentation comporte un tableau de bord TB où sont visualisées les télémesures et les télésignalisations dont l'ensemble constitue les téléinformations, et un pupitre de commande PC comportant des boutons-poussoirs et des curseurs correspondant aux ordres en tout-ou-rien ou proportionnels. Ce pupitre de commande et ce tableau de bord constituent les entrées et les sorties d'un bloc électronique BPP associé au poste de pilotage. Ce bloc est connecté à un câble triphasé de dérivation CTD raccordé au câble d'alimentation par un boîtier de dérivation BD.

Les blocs électroniques BPP et BH (représenté à plus grande échelle à côté de la haveuse H) ont des structures globales semblables, même si leurs composants sont plus ou moins différents. Ces blocs comportent tous deux un coupleur, CPP et CH respectivement, assurant leur liaison au câble de dérivation CTD et au câble d'alimentation CTA, un émetteur (EP et EH respectivement) et un récepteur (RP et RH respectivement), et un circuit global de codage binaire (CCBP et CCBH respectivement) relié aux entrées et sorties associées. Ces blocs sont alimentés au travers de transformateurs annexes à partir des câbles triphasés CTD et CTA associés.

Selon une caractéristique de l'invention, les éléments EP et RH d'une part, et EH et RP d'autre part, définissent avec les portions correspondantes des circuits de codage binaire associés des chaînes de transmission indépendantes elles ne comprennent en commun que les coupleurs et les câbles triphasés qui sont des éléments tout-à-fait fiables.

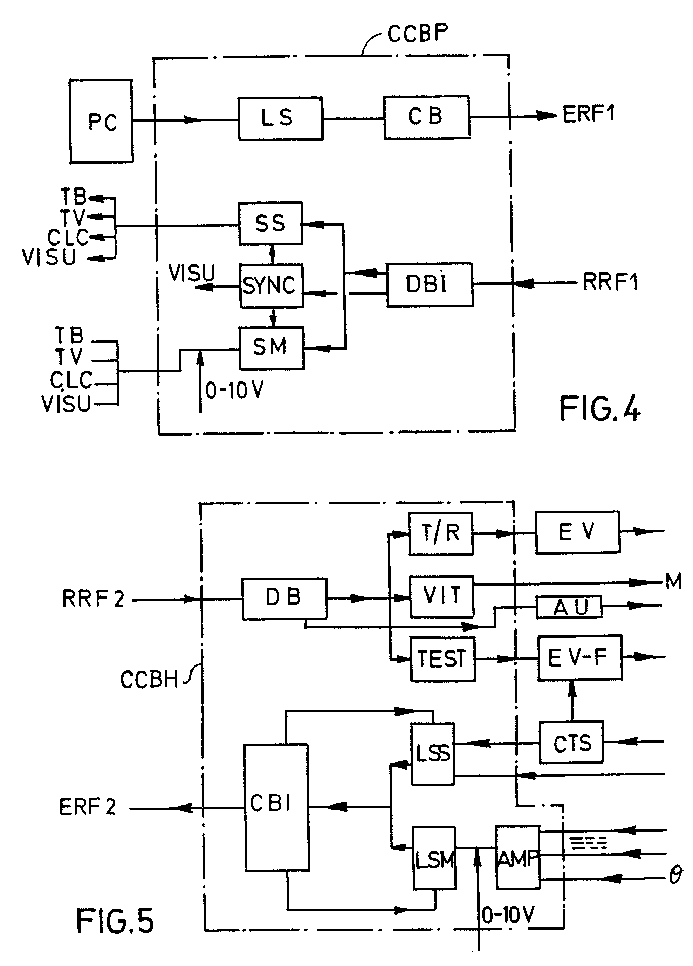

Les circuits de codage binaire respectivement associés au poste de pilotage et à la haveuse sont détaillés aux figures 4 et 5; leurs parties hautes correspondent à la chaîne de transmission associée aux ordres de télécommande tandis que leurs parties basses correspondent à la chaîne de transmission associée aux téléinformations. La structure globale de ces chaînes est similaire aux chaînes de télécommande proposées dans la demande de brevet précitée au début du texte.

La partie haute du circuit de codage binaire BCBP associé au poste de pilotage (voir figure 4) comporte tout d'abord une logique LS spécifique de la machine à commander, donc de la haveuse considérée H; celle-ci "filtre", regroupe et canalise les ordres données par le conducteur par l'intermédiaire du pupitre de commande PC en sorte de ne retenir que des ordres compatibles et susceptibles d'être émis simultanément. D'éventuelles erreurs de commande, par appui parasite sur deux boutons-poussoirs par exemple, peuvent ainsi être éliminées. Les ordres retenus par la logique spécifique et traduits sous forme binaire passent ensuite dans un codeur binaire CB qui assure le codage des ordres désirés simultanément en signaux logiques successifs au sein de séquences successives de bits. Le signal séquentiel ainsi obtenu est ensuite transmis à l'émetteur EP qui module en conséquence une fréquence porteuse (choisie par exemple à 400 kHz, dans la gamme des fréquences rendant minimale l'atténuation subie lors d'un transfert le long du câble d'alimentation considéré) avant de l'injecter, grâce au coupleur, dans le câble de dérivation CTD puis le câble d'alimentation CTA.

L'onde électrique recueillie par le coupleur CH associé à la haveuse est transmise au récepteur RH, accordé sur cette fréquence porteuse de 400 kHz (voir la partie haute de la figure 5); celui-ci restitue un signal démodulé à un décodeur binaire DB. A ce décodeur binaire est en fait associé un étage d'autorisation de décodage destiné à vérifier des critères prédéterminés de validité. Les ordres binaires ainsi obtenus en parallèle sont traités par une logique spécifique de sortie puis un étage de sortie. Dans l'exemple considéré, la logique spécifique de sortie comprend un circuit VIT de prise en compte de l'ordre variable (ou proportionnel) associé au sens et à la vitesse de déplacement de la haveuse, et un circuit T/R de prise en compte des ordres tout-ou-rien. Un autre circuit TEST est en outre prévu, de façon avantageuse, pour tester le bon fonctionnement du frein de sécurité EV - F. En fait, ce dernier est aussi actionné en cas de vitesse nulle. Il est rappelé que la commande binaire de l'ordre de vitesse suppose la définition préalable, selon les besoins du conducteur, de valeurs intermédiaires entre les valeurs extrêmes de ces ordres. Le circuit T/R assure au travers d'un étage EV, la commande de diverses électrovannes ou relais. Pour des raisons de sécurité, un étage d'arrêt d'urgence AU est prévu pour l'arrêt complet de la machine en cas d'incident.

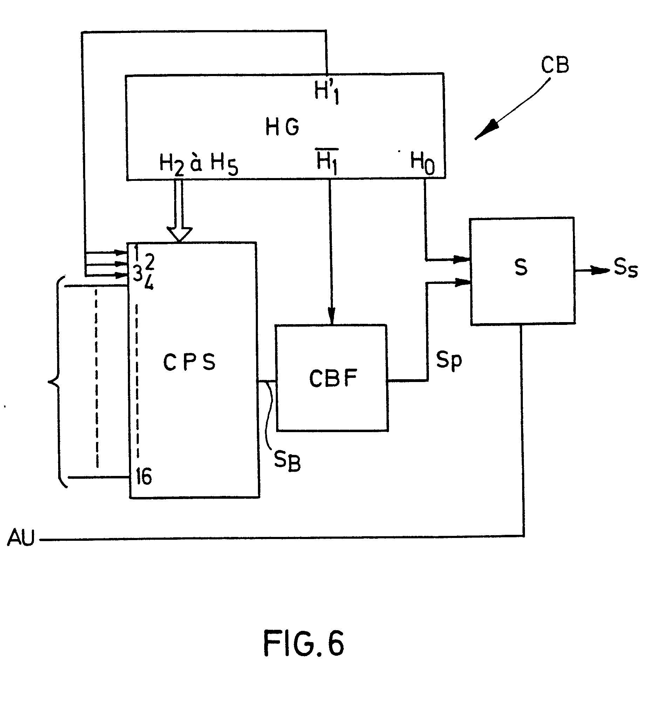

La figure 6 présente le montage des principaux éléments constitutifs du codeur binaire CB. Il comporte une horloge HG, un convertisseur parallèle-série CPS, un codeur en biphase CBF, et un sélecteur S.

L'horloge HG délire divers signaux dont le rôle apparaîtra plus loin, qui peuvent être définis par rapport à une fréquence $\underline{f}$ prédéterminée, à des rapports 1/2 près:

- $H_0$ de fréquence 4f;
- $\bar{H}_1$ et $H'_1$ de fréquence 2f avec un déphasage d'un quart de période en retard entre $H'_1$ et $\bar{H}_1$; et
- $H_2$, $H_3$, $H_4$, $H_5$ correspondant à des fréquences f, f/2, f/4 et f/8.

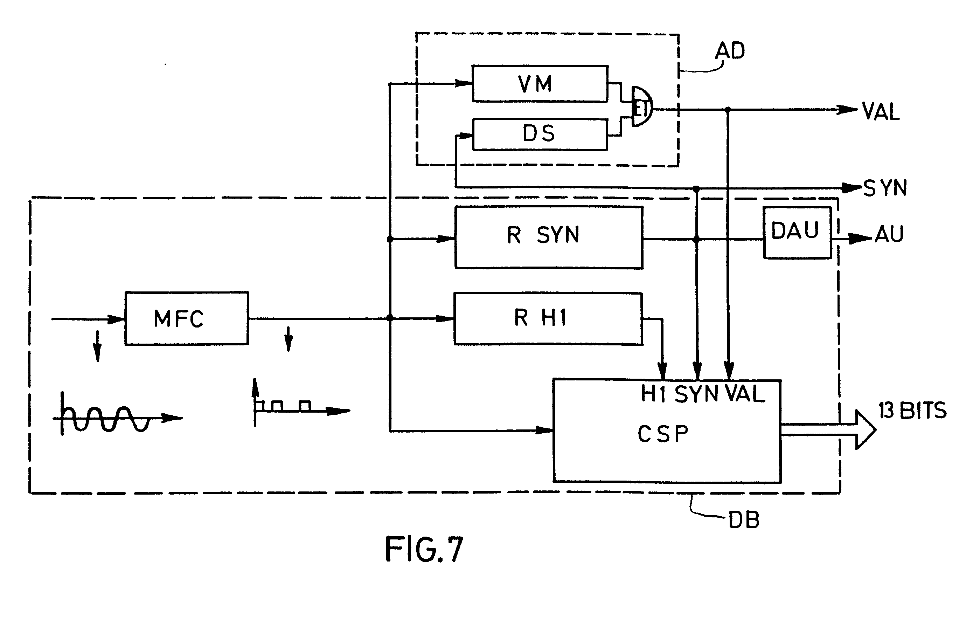

La figure 7 présente le montage des principaux éléments constitutifs du décodeur binaire DB. Le décodeur comporte d'abord un circuit MFC de mise en forme et de calibrage en amplitude qui convertit le signal démodulé fourni par le récepteur RH en un signal binaire. Celui-ci n'est en fait pas rigoureusement semblable au signal appliqué à l'émetteur EP; des circuits de reconnaissance sont prévus après le circuit pour repérer les altérations subies par le signal binaire entre le poste de pilotage et la haveuse en vue, soit de les éliminer, soit d'interrompre le décodage.

Le point capital du décodage est la récupération des rythmes en vue de définir avec précision le début de chaque séquence de bits, et la position de chaque bit dans chaque séquence en sorte de commander de manière correcte des conversions successives du signal calibré par un convertisseur série-parallèle CSP. Un circuit RSYN a ainsi pour but de récupérer la fréquence de renouvellement des séquences dans le signal binaire calibré, et de commander une conversion au début de chaque séquence. A ce circuit RSYN est associé un circuit DAU de détection d'arrêt d'urgence, pour des raisons qui apparaîtront plus loin. Un circuit RH1 est en outre prévu pour assurer un calage en synchronisation avec la fréquence de répétition des bits dans chaque séquence.

En parallèle sur le décodeur binaire est disposé un circuit d'autorisation de décodage AD délivrant au convertisseur CSP un signal de validité VAL. Dans l'exemple représenté, ce circuit AD comprend un circuit VM qui vérifie la vraisemblance de la valeur moyenne du signal calibré, et un circuit DS qui vérifie la vraisemblance de la durée moyenne des séquences à partir du signal délivré par le circuit RSYN. Une porte ET est raccordée aux sorties des circuits VM et DS en sorte de ne délivrer le signal VAL de déclenchement au convertisseur que si chaque test de vraisemblance est satisfait. Dans le cas centraire, aucune conversion du signal binaire calibré n'est autorisée.

Un circuit supplémentaire de validation, non représenté, intervient de préférence à la sortie du convertisseur CSP en vue d' exploiter la redondance qui doit normalement apparaître entre les bits de séquences successives; ce circuit ne transmet les signaux binaires parallèles aux divers circuits VIT, T/R et TEST qu'après avoir vérifié que ces signaux se reproduisent à l'identique pendant un nombre donné de séquences successives sans que le circuit d'autorisation de décodage n'ait interrompu les conversions par le convertisseur CSP (l'état des sorties de ce dernier reste en effet figé tant qu'une nouvelle conversion n'est pas déclenchée.

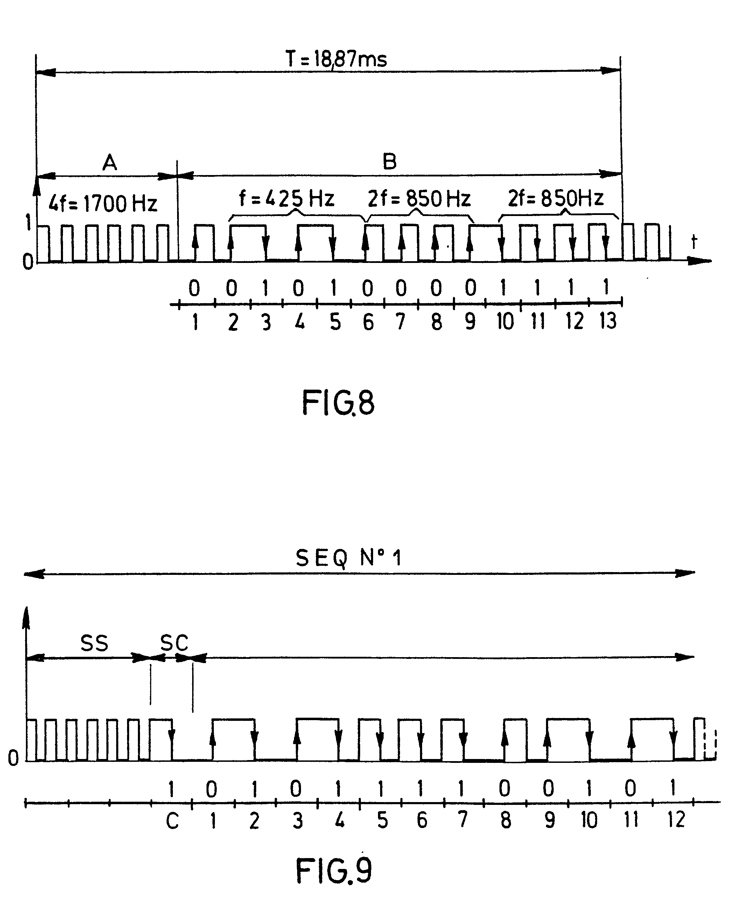

La figure 8 montre un exemple de séquence d'un signal séquentiel binaire préconisé par l'invention (à rapprocher des enseignements de la demanderesse de brevet précitée au début du texte). Cette séquence comporte 16 bits disponibles (ce nombre est en pratique choisi égal au nombre d'entrées-sorties parallèles des convertisseurs utilisés). Les trois premiers bits sont en fait occupés par un signal de synchronisation (2 créneaux par bit) de fréquence égale à $H_0 = 4f$; il reste 13 bits disponibles pour un transfert d'informations.

Selon une caractéristique avantageuse de l'invention, le codage des bits d'information est de type biphase, la valeur de l'état binaire codé dans chaque bit d'information étant traduite par le sens d'une transition binaire au milieu de chaque bit une transition médiane de bas en haut correspond à l'état 0, et inversement. Un des intérêts de ce codage biphase est que la valeur moyenne du signal binaire est égale à la moitié du niveau maximum. Selon que des bits d'information successifs sont de même valeur, ou de valeurs distinctes, il apparaît des signaux intermédiaires de fréquence 2f ou f, soit la moitié ou le quart de la fréquence $H_0$ de synchronisation.

Compte tenu de ce que les signaux carrés à f et 2f ne présentent que des harmoniques de rangs impairs, les composantes spectrales du signal séquentiel concernant les bits d'information, d'une part, et la synchronisation, d'autre part, sont bien distinctes sur l'échelle des fréquences. C'est cette propriété qui permet d'extraire du signal binaire calibré, à la réception, les signaux de synchronisation qui sont nécessaires au décodage de chaque séquence. Cette propriété rend en outre possible de définir un ordre d'arrêt d'urgence par l'introduction dans les bits d'information de la fréquence de synchronisation: une telle définition de l'arrêt d'urgence en permet une reconnaissance particulièrement aisée lors du décodage.

Dans l'exemple représenté à la figure 8, la fréquence de synchronisation est de 1700 Hz tandis que la fréquence $H_5$ de répétition des séquences (f/8) correspond à une durée de séquence de 18,87 ms.

L'élaboration du signal séquentiel binaire par le codeur binaire de la figure 6 peut se décrire comme suit, compte tenu des définitions données précédemment des signaux d'horloge $H_0$, $\bar{H}_1$ et $H'_1$: on élabore d'abord un signal brut qui reprend $H'_1$ pendant les trois premiers bits de la séquences et qui prend un niveau nul pour les états binaires 0 du signal initial fourni par le convertisseur CPS et un niveau maximum pour les états binaires 1 de ce signal initial; on élabore ensuite un signal codé dont le niveau est maximal lorsque le signal brut et $\bar{H}_1$ ont même niveau, et dont le niveau est minimal lorsque le signal brut et $\bar{H}_1$ sont de niveaux différents. Ce signal codé constitue le signal de sortie, à moins qu'un ordre d'arrêt d'urgence ne lui substitue le signal $H_0$ de synchronisation.

La chaîne de téléinformations représentée aux parties basses des figures 4 et 5 a une structure sensiblement voisine de celle de la chaîne de télécommande qui vient d'être décrite, la principale différence provenant de ce que, compte tenu de leur nombre important, les téléinformations sont, selon l'invention, réparties dans des cycles de plusieurs séquences (10 par exemple), le débit informationnel étant maintenu élevé grâce à une fréquence plus élevée que pour la transmission des ordres de télécommande. Un calibrage en amplitude des signaux de mesure est en outre nécessaire avant codage.

La partie émission, représentée à la partie basse de la figure 5 comprend ainsi, de droite à gauche, une logique spécifique LSS associée aux signaux de signalisation (tout-ou-rien ou variable), et une logique spécifique LSM associée aux signaux de mesure, précédée d'un amplificateur AMP de calibration. Parmi les signaux importants de signalisation figure l'état du capteur CTS de thésigraphe et de survitesse destiné à fournir la position de la haveuse entre ses positions extrêmes, tout en étant prêt à détecter une éventuelle vitesse excessive de déplacement, auquel cas le frein de sécurité EV - F doit être actionné. Parmi les signaux de mesure importants intervient la température du moteur de la haveuse.

Compte tenu des capacités courantes des convertisseurs parallèles-série utilisés en pratique, il convient de déclencher plusieurs conversions successives pour prendre en compte les divers signaux de téléinformations utiles un cycle de plusieurs séquences est alors nécessaire pour transmettre l'ensemble des informations.

Ces cycles de séquences sont ensuite codés en biphase comme précédemment dans un codeur binaire d'informations CBI. Une fréquence porteuse, distincte de la fréquence porteuse de télécommande est choisie: 335 kHz par exemple.

A la réception, le signal démodulé délivré par le récepteur RRF1 est appliqué à un décodeur binaire d'information DBI qui le calibre et le met en forme puis, après reconnaissance des rythmes (notamment la fréquence de cycle), et vérification des critères prédéterminés de vraisemblance, assure des conversions série-parallèle successives et répartit les signaux entre un étage SS de traitement des signaux de signalisation, et un étage de traitement des signaux de mesures. Ces derniers sont, le cas échéant, convertis sous forme analogique. Un étage SYNC est de préférence prévu pour exploiter la redondance que doivent présenter les signaux de synchronisation de cycle.

Les téléinformations sont, d'une part, affichées sur le tableau de bord TB, mais peuvent aussi, si cela peut paraître utile, être transmis sur un circuit de télévigile TV remontant au jour, à un calculateur CLC ou à un tableau de visualisation VISU destiné au personnel d'intervention.

La figure 9 représente un exemple de première séquence binaire d'un cycle. Cette séquence ne diffère de celle représentée à la figure 8 que par la présence, après les trois bits de synchronisation, d'un bit unique de synchronisation de cycle, ce qui laisse 12 bits d'informations.

La Demanderesse a en effet pu constater que la reconnaissance du rythme de cycle peut être obtenue à l'aide d'un seul bit, dont l'état binaire est 1 pour la première séquence du cycle, et dont l'état binaire est 0 pour les séquences suivantes. La reconnaissance de rythme de cycle est ainsi à la fois facile et fiable, aucun bit "1" parasite n'ayant été observé au cours d'essais pourtant nombreux, et la redondance concernant ces bits de synchronisation de cycle étant aisée à exploiter.

Il va de soi que la description qui précède n'a été proposée qu'à titre illustratif et que de nombreuses variantes peuvent être proposées par l'homme de l'art sans sortir du cadre de l'invention. Ainsi la structure spécifique des coupleurs peut être modifiée. Une légère dissymétrie dans la manière de connecter les deux conducteurs à prendre conjointement pour le branchement d'un émetteur ou un récepteur au câble triphasé considéré peut être admise, bien que cela induise, pour le branchement de deux coupleurs en deux points dudit câble, des pertes de signal pouvant excéder dans certains cas défavorables la valeur de 6 dB indiquée précédemment. Il est rappelé que, en fonction des caractéristiques du câble triphasé, il est possible de trouver des fréquences porteuses optimales et d'en déduire des valeurs optimales pour les impédances des divers éléments constitutifs du coupleur. Il est enfin à noter que, dans le cas d'un échange croisé d'ordres de télécommande et de téléinformations, des éléments standards et/ou modulaires interviennent dans les deux chaînes de transmission de signaux; les éléments d'une chaîne de téléinformation, grâce à la possibilité notamment de prendre en compte un signal d'arrêt d'urgence, peuvent en effet être utilisés dans une chaîne de télécommande ces éléments sont notamment avantageux dans le cas d'un grand nombre d'ordres à transmettre.

Selon une application avantageuse de l'invention, l'équipement de transfert de signaux qui vient d'être décrit est complété par des liaisons téléphoniques avec le jour en sorte de disposer à la surface du sol, à distance de l'installation électrique proprement dite, un système de codage-décodage avec un pupitre de commande et un tableau de visualisation, en remplacement ou en addition du système de codage-décodage avec pupitre de commande et tableau de visualisation qui a été décrit ci-dessus; une telle adaptation revient essentiellement, dans la figure 3, à réaliser téléphoniquement les liaisons entre EP et RP, d'une part, et CCBP, d'autre part, et en utilisant des alimentations indépendantes.

**Revendications**

1. Procédé pour le transfert de signaux concernant une machine électrique par modulation en amplitude d'une fréquence porteuse, selon lequel on applique un signal à émettre en un premier point d'un câble triphasé (CTA) au travers d'un coupleur, et on recueille un signal de réception en un second point de ce câble triphasé au travers d'un autre coupleur, caractérisé en ce que, ce câble triphasé étant le câble triphasé d'alimentation dont est munie la machine électrique, on applique le signal à émettre entre l'un quelconque (1) des conducteurs de phase (1, 2, 3) de ce câble et les deux autres conducteurs de phase (2, 3) pris conjointement, et on recueille le signal de réception entre l'un quelconque (1, 3) des conducteurs de phase du ce et les deux autres (2, 3; 1, 2) pris conjointement, chaque coupleur comportant des condensateurs semblables (C1) associés à chacun des conducteurs de phase ainsi qu'une inductance (L).

2. Procédé selon la revendication 1, caractérisé en ce que le signal à émettre est codé sous forme binaire biphase, en séquences de 16 bits dont les trois premiers sont occupés par un signal de synchronisation dont la période est égale à la moitié de la durée d'un bit.

3. Procédé selon la revendication 2, caractérisé en ce que le signal à émettre est codé sous forme binaire biphase, en cycles de plusieurs séquences de 16 bits, le quatrième bit des séquences étant a l'état 1 pour la première séquence du cycle, et étant à 0 pour les séquences suivantes.

4. Procédé selon l'une quelconque des revendications 1 à 3, caractérisé en ce que l'on transmet, dans un sens, des ordres de télécommande destinés à ladite machine, et que l'on transmet en retour, en provenance de ladite machine, des informations de mesure et de signalisation.

5. Procédé selon la revendication 4, caractérisé en ce que l'on transmet les ordres de télécommande sous la forme de séquences de bits codés en biphase et que l'on transmet les informations en retour sous la forme de cycles de séquence de bits codés en biphase.

6. Equipement pour le transfert de signaux associés à une machine électrique, comportant un émetteur (E) et un récepteur (R) accordés sur une fréquence porteuse et respectivement connectés par des coupleurs en deux points distants d'un câble triphasé (CTA), caractérisé en ce que ce câble est le câble triphasé d'alimentation dont est munie la machine électrique, en ce que chaque coupleur comporte des condensateurs semblables (C1) associés à chacun des conducteurs de phase ainsi qu'une inductance (L), et en ce que l'émetteur (E) et le récepteur (R) sont connectés, indépendamment l'un de l'autre, entre l'un quelconque des conducteurs de phase (1, 2, 3), et les deux autres conducteurs de phase pris conjointement.

7. Equipement selon la revendication 6, caractérisé en ce qu'un transformateur de séparation galvanique (T) est disposé entre cas conducteurs et l'émetteur ou le récepteur.

8. Equipement selon la revendication 6 ou la revendication 7, caractérisé en ce qu'un émetteur de télécommande (EP) et un récepteur de téléinformation (RP) sont disposés à distance de la machine dans une cabine te pilotage, et qu'un récepteur de télécommande (RH) et un émetteur de téléinformation (EH) sont montés sur la machine.

9. Equipement selon l'une quelconque des revendications 6 à 8, caractérisé en ce qu'il comporte, en amont de chaque émetteur, un codeur binaire (CD, CBI) comportant un convertisseur parallèle-série (CPS) et un codeur en biphase (CBF) et, en aval de chaque récepteur, un décodeur binaire (DB - DBI) comprenant un convertisseur série-parallèle (CSP) soumis à un circuit d'autorisation de décodage (AD) vérifiant la vraisemblance de la valeur moyenne et de la durée moyenne de chaque séquence.

10. Equipement selon la revendication 9, caractérisé en ce qu'il comporte en amont d'un émetteur (ERF2) un codeur binaire (CBI) adapté à déclencher de façon cyclique le convertisseur parallèle-série associé et, en aval du récepteur associé, un circuit (SYNC) d'exploitation de la redondance d'un signal de synchronisation de cycle.

## Patentansprüche

1. Verfahren zur Übertragung von Signalen betreffend eine elektrische Maschine durch Amplitudenmodulation einer Trägerfrequenz, bei welchem ein zu sendendes Signal an einem ersten Punkt eines Dreiphasenkabels (CTA) über einen Koppler angelegt und ein Empfangssignal an einem zweiten Punkt dieses Dreiphasenkabels über einen anderen Koppler abgenommen wird, dadurch gekennzeichnet, daß dieses Dreiphasenkabel das Dreiphasen-Speisekabel ist, mit welchem die elektrische Maschine versehen ist, das zu sendende Signal zwischen irgendeinem (1) der Phasenleiter (1, 2, 3) dieses Kabels und den beiden anderen Phasenleitern (2, 3) zusammengenommen angelegt und das Empfangssignal zwischen irgendeinem der (1, 3) der Phasenleiter des Kabels und den beiden anderen (2, 3; 1, 2) zusammengenommen abgenommen wird, wobei jeder Koppler vergleichbare Kondensatoren (C1) enthält, welche mit jeweils einem der Phasenleiter sowie mit einer Induktivität (L) verbunden sind.

2. Verfahren nach Anspruch 1, dadurch gekennzeichnet, daß das zu sendende Signal in binärer Zweiphasenform in Sequenzen von 16 Bit kodiert ist, von denen die ersten drei durch ein Synchronisationssignal besetzt sind, dessen Periode gleich der Hälfte der Dauer eines Bits ist.

3. Verfahren nach Anspruch 2, dadurch gekennzeichnet, daß das zu sendende Signal in binärer Zweiphasenform in Zyklen von mehreren Sequenzen von 16 Bit kodiert ist, wobei sich das vierte Bit der Sequenzen im Zustand 1 für die erste Sequenz des Zyklus und im Zustand 0 für die folgenden Sequenzen befindet.

4. Verfahren nach einem der Ansprüche 1 bis 3, dadurch gekennzeichnet, daß in einer Richtung Fernsteuerbefehle für die genannte Maschine und zurück, von der genannten Maschine herkommend, Meß- und Signalisierungsinformationen übertragen werden.

5. Verfahren nach Anspruch 4, dadurch gekennzeichnet, daß die Fernsteuerbefehle in Form von zweiphasenkodierten Bit-Sequenzen und die zurückkommenden Informationen in Form von zweiphasenkodierten Bitsequenzen-Zyklen übertragen werden.

6. Einrichtung zur Übertragung von Signalen im Zusammenhang mit einer elektrischen Maschine, mit einem Sender (E) und einen Empfänger (R), die auf eine Trägerfrequenz abgestimmt und über Koppler an zwei voneinander entfernten Punkten eines Dreiphasenkabels (CTA) angeschlossen sind, dadurch gekennzeichnet, daß dieses Kabel das Dreiphasen-Speisekabel ist, mit dem die elektrische Maschine versehen ist, und daß jeder Koppler vergleichbare Kondensatoren (C1) enthält, welche jeweils einem der Phasenleiter sowie einer Induktivität (L) zugeordnet sind, und daß der Sender (E) und der Empfänger (R) unabhängig voneinander zwischen einem beliebigen der Phasenleiter (1, 2, 3) und den beiden anderen Phasenleitern zusammengenommen angeschlossen sind.

7. Einrichtung nach Anspruch 6, dadurch gekennzeichnet, daß ein galvanischer Trenn-Transformator (T) zwischen den Leitern und dem Sender oder Empfänger angeordnet ist.

8. Einrichtung nach Anspruch 6 oder 7, dadurch gekennzeichnet, daß ein Fernsteuersender (EP) und ein Teleinformationsempfänger (RP) in Entfernung von der Maschine in einer Steuerkabine angeordnet sind, und daß ein Fernsteuerempfänger (RH) und ein Teleinformationssender (EH) an der Maschine angebracht sind.

9. Einrichtung nach einem der Ansprüche 6 bis 8, dadurch gekennzeichnet, daß sie vor jedem Sender einen Binärkodierer (CB, CBS), der einen Parallel-Serie-Umsetzer (CPS) enthält, und einen Zweiphasenkodierer (CBF) und nach jedem Empfänger einen Binärdekodierer (DB - DBI) aufweist, der einen Serien-Parallel-Umsetzer (CSP) enthält, der von einem Dekodierungs-Freigabeschaltkreis (AD) abhängig ist, welcher die Wahrscheinlichkeit des mittleren Wertes und der mittleren Dauer jeder Sequenz verifiziert.

10. Einrichtung nach Anspruch 9, dadurch gekennzeichnet, daß sie vor dem Sender (ERF2) einen Binärkodierer (CBS), der geeignet ist, in zyklischer Weise den zugehörigen Parallel-Serie-Umsetzer auszulösen, und nach dem zugehörigen Empfänger einen die Redundanz eines Synchronisationssignals der Zyklen ausnutzenden Schaltkreis (SYNC) aufweist.

**Claims**

1. A method of signal transfer which relates to an electric machine and which involves amplitude modulation of a carrier frequency, wherein a signal to be transmitted is applied to a first point of a three phase cable (CTA) through a connecting conductor and a reception signal is collected at a second point of the three phase cable through another connecting conductor, characterized in that the three phase cable is the supply cable with which the electric machine is equipped, the signal to be transmitted is applied between any one (1) of the phase conductors (1, 2, 3) of this cable and the two other phase conductors (2, 3) taken conjointly, and the reception signal is collected between any one of the phase conductors (1, 3) of the cable and both the others (2, 3; 1, 2) taken conjointly, and each connecting conductor comprises similar capacitors (C1) associated with each of the phase conductors and also an inductance (L).

2. A method according to claim 1, characterized in that the signal to be transmitted is encoded in binary biphase form in sequences of 16 bits, of which the first three are filled by a synchronization signal having a cycle period equal to half the duration of one bit.

3. A method according to claim 2, characterized in that the signal to be transmitted is encoded in binary biphase form in cycles of several sequences of 16 bits, the fourth bit in the sequence being in state 1 for the first sequence in the cycle and being in state 0 for the following sequences.

4. A method according to any one of claims 1 to 3, characterized in that remote control orders intended for the said machine are transmitted in one direction, and measurement and signalization information data originating from the said machine are transmitted back.

5. A method according to claim 4, characterized in that remote control orders are transmitted in the form of biphase encoded bit sequences and the information data is transmitted back in the form of cycles of biphase encoded bit sequences.

6. Equipment for the transfer of signals associated with an electric machine comprising a transmitter (E) and a receiver (R) tuned to a carrier frequency and connected respectively by connecting conductors at two distant points of a three phase cable (CTA), characterized in that the three phase cable is the supply cable with which the electric machine is equipped, in that each connecting conductor comprises similar capacitors (C1) associated with each of the phase conductors and also an inductance (L), and in that the transmitter (E) and the receiver (R) are connected, independently of one another, between any one of the phase conductors (1, 2, 3) and both the other phase conductors taken conjointly.

7. Equipment according to claim 6, characterized in that an isolation transformer (T) is disposed between these conductors and the transmitter or the receiver.

8. Equipment according to claim 6 or claim 7, characterized in that a remote control transmitter (EP) and a remote information receiver (RP) are disposed at a distance from the machine in a control cabin, and a remote control receiver (RH) and a remote information transmitter (EH) are mounted on the machine.

9. Equipment according to any one of claims 6 to 8, characterized in that it comprises, upstream of each transmitter, a binary encoder (CB, CBI) comprising a parallel-series converter (CPS) and a biphase encoder (CBF) and, downstream from each receiver, a binary decoder (DB - DBI) comprising a series-parallel converter (CSP) under the control of a decoding enabling circuit (AD) which checks the credibility of the average value and the average duration of each sequence.

10. Equipment according to claim 9, characterized in that it comprises, upstream from a transmitter (ERF2), a binary encoder (CBI) which is adapted to trigger cyclically the associated parallel-series converter and, downstream from the associated receiver, a circuit (SYNC) for exploitation of the redundancy of a cycle synchronization signal.

FIG.1

FIG.2

EP 0 171 302 B1

FIG.3

FIG.4

FIG.5

FIG.6

FIG.7

FIG.8

FIG.9